# EUROPEAN PATENT APPLICATION

(11) **EP 4 063 004 A1**
(43) Date of publication of application: **28.09.2022**
(21) Application number: 20891334.3
(22) Date of filing: 19.11.2020
(51) Int. Cl.: B01D 63/02

(54) **HOLLOW FIBER MEMBRANE MODULE**

(30) Priority: 20.11.2019 JP 2019209763
(71) Applicant: Nipro Corporation, Osaka-shi, Osaka 531-8510 (JP)
(72) Inventor: MASUDA, Toshiaki, Osaka-shi, Osaka 531-8510 (JP); KOBAYASHI, Kyoetsu, Osaka-shi, Osaka 531-8510 (JP); SADAHIRO, Kaname, Osaka-shi, Osaka 531-8510 (JP); TAKAHASHI, Toshinari, Osaka-shi, Osaka 531-8510 (JP)
(74) Representative: Betten & Resch
(86) International application number: PCT/JP2020/043214
(87) International publication number: WO 2021/100811

(57) **Abstract**

There is provided a hollow fiber membrane module having a practical treatment capacity and a small pressure loss on a treatment liquid side.

The hollow fiber membrane module (100) includes a casing (10) and a hollow fiber bundle (30) arranged in the casing, and the hollow fiber bundle has crimped hollow fibers (31) and non-rolled hollow fiber bundles (32), and at least a portion of the non-crimped hollow fibers (32) forms an aggregate part (33) in which the non-crimped fibers are adjacent to each other.

## Description

### Technical Field

The present invention relates to a hollow fiber membrane module.

### Background Art

Hollow fiber membrane modules in which hollow fibers made of a semipermeable membrane are used are used in many fields as a device for treating a liquid to be treated which flows through hollow fiber cavities by flowing a treatment liquid outside the hollow fibers. Such modules are used as, for example, dialyzers in the medical field and water treatment devices in the environmental field. Examples of such hollow fiber membrane modules include those disclosed in Patent Documents 1 to 3.

### Prior Art Documents

### Patent Documents

Patent Document 1: JP 57-194007 A
Patent Document 2: JP 2003--523819 A
Patent Document 3: JP 2016-528948 A
Patent Document 4: JP 01-022308 A

### Summary of the invention

### Problems to be Solved by the Invention

In the hollow fiber membrane modules described in Patent Documents 1 and 2, a hollow fiber bundle composed of crimped hollow fibers is used, and in the hollow fiber membrane modules described in Patent Documents 3 and 4, a hollow fiber bundle containing non-crimped fibers in addition to the crimped hollow fibers is used so as to study the flow of the treatment liquid.

In the hollow fiber membrane module, it is important to reduce a difference on the treatment liquid side between a pressure at the treatment liquid inlet and a pressure at the treatment liquid outlet of the hollow fiber membrane module, that is, a pressure loss on the treatment liquid side. Further, if the pressure loss on the treatment liquid side is large, a pump for supplying the treatment liquid may be excessively burdened. The current situation is such that no technique for reducing the pressure loss on the treatment liquid side is sufficient.

The present invention has been made under the consideration of the above and intends to provide a hollow fiber membrane module having a practical treatment capacity with a small pressure loss on the treatment liquid side.

### Means for Solving Problems

The inventors have diligently studied the above problems, and found that when a hollow fiber bundle including non-crimped hollow fibers and crimped hollow fibers is used, and an aggregate part formed of the non-crimped hollow fibers is included in the bundle, the flow of the treatment liquid in a casing becomes smooth, so that the pressure loss on the treatment liquid side is reduced, which have resulted in the present invention.

Therefore, in an aspect of the present invention, there is provided a hollow fiber membrane module comprising a casing and a hollow fiber bundle disposed in the casing, wherein
the hollow fiber bundle includes crimped hollow fibers and non-crimped hollow fibers, and
at least a portion of the non-crimped hollow fibers forms an aggregate part.

### Effect of the invention

The present invention provides a hollow fiber membrane module having a practical treatment capacity with a small pressure loss on the treatment liquid side.

### Brief Description of the Drawings

Fig. 1 is a schematic cross-sectional view of the hollow fiber membrane module according to an embodiment of the present invention, which view is taken along the longitudinal direction of the module.
Fig. 2 is a schematic cross-sectional view of a middle portion of the casing of the hollow fiber membrane module of Fig. 1, which view is substantially perpendicular to the longitudinal direction of the casing.
Fig. 3 is a schematic cross-sectional view of other embodiment of the middle portion of the casing of the hollow fiber membrane module of Fig. 1, which view is substantially perpendicular to the longitudinal direction of the casing.
Fig. 4 is a schematic cross-sectional view of a further embodiment of the middle portion of the casing of the hollow fiber membrane module of Fig. 1, which view is substantially perpendicular to the longitudinal direction of the casing.
Fig. 5 is a schematic cross-sectional view of an end portion of the casing of the hollow fiber membrane module of Fig. 1, which vies is substantially perpendicular to the longitudinal direction of the casing.

### Embodiments for Carrying Out the Invention

Hereinafter, embodiments of the hollow fiber membrane module according to the present invention will be described with reference to the drawings. It is however noted that the embodiments described below are only examples for embodying the technical idea of the present invention, and the present invention is not limited to those embodiments. The drawings referred to in the following description schematically show the embodiments of the present invention for ease of understanding the present invention.

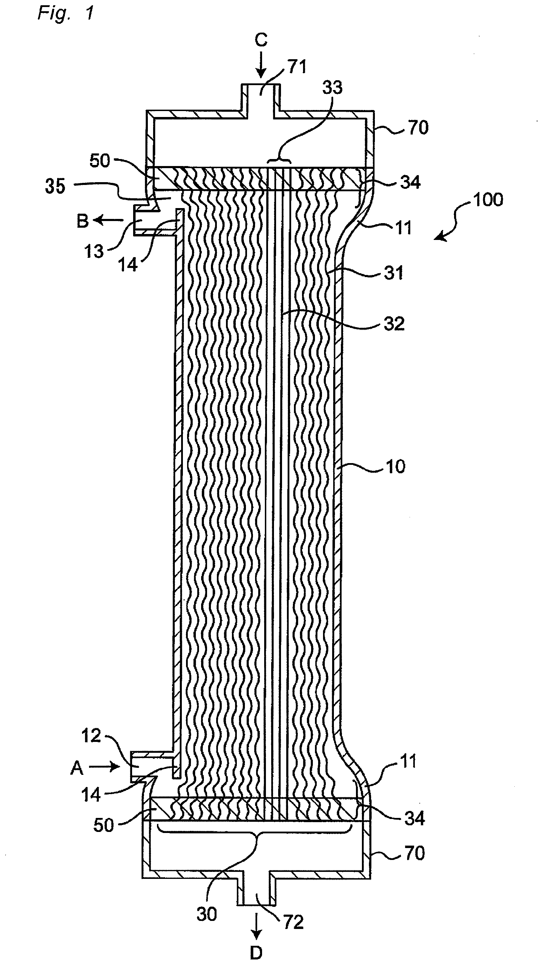

As shown in Fig. 1, the hollow fiber membrane module 100 according to the embodiment of the present invention has a casing 10 and a hollow fiber bundle 30 arranged in the casing. In Fig. 1, for the sake of simplicity, the crimped hollow fibers 31 and the non-crimped hollow fibers 32 are shown with solid lines. Further, a portion of the end portion 34 of the hollow fiber bundle 30 is fixed to the end portion 11 of the casing 10 with a potting material 50. The treatment liquid flows into the casing 10 through a treatment liquid inlet 12 arranged on the casing 10 (see arrow A), and flows out of the casing 10 through a treatment liquid outlet 13 arranged on the casing 10 (see arrow B). A liquid to be treated flows into a header 70 through an inlet 71 for the liquid to be treated arranged on a header 70 (see arrow C), flows through inner cavities of the hollow fibers, and flows out of an opposite side header 70 through an outlet 72 for the liquid to be treated arranged on the header 70 (see arrow D).

The hollow fiber bundle 30 includes a large number of the hollow fibers (for example, about 5,000 to about 15,000), which is composed of the crimped hollow fibers 31 and the non-crimped hollow fibers 32. As shown in Fig. 1, at least a portion of the non-crimped hollow fibers, preferably at least 70%, more preferably at least 80%, still more preferably at least 90%, particularly preferably at least 95%, and for example substantially all of the non-crimped hollow fibers 32 forming the hollow fiber bundle forms the aggregate part (which may hereinafter be referred to as "non-crimped hollow fiber aggregate part") 33. With such configuration, the pressure loss on the treatment liquid side can be reduced. The crimped hollow fibers 31 and the non-crimped hollow fibers 32 may be collectively referred to as "hollow fibers".

When used herein, the term "crimped hollow fiber" means a hollow fiber having a crimped portion in the longitudinal direction (that is, the stretching direction) of the hollow fiber, and having, for example, a corrugated wave shape, a sine wave shape, a triangular wave shape, a zigzag shape, a spiral shape, or the like (for example, an amplitude: 0.05 mm or more to 3.00 mm or less, a wavelength: 0.5 mm or more to 15 mm or less) or any combination thereof which is repeated regularly or irregularly. Further, the crimped hollow fiber may be twisted and / or undulated. It is noted that the crimped hollow fiber may include a non-crimped portion, that is, a linear or substantially linear (hereinafter, may be referred to as "linear") portion as long as the effect of the present invention is not impaired. Such embodiment may be one in which the flowing of the treatment liquid in the casing is not substantially affected, and for example, an embodiment wherein a portion, for example an end portion, of the crimped hollow fiber is non-crimped, and an embodiment wherein a length of, for example, up to about 20 % of the total length of the crimped hollow fiber is non-crimped, and the like.

As used herein, the term "non-crimped hollow fiber" means a hollow fiber that is not crimped and is substantially linear. It is noted that the non-crimped hollow fiber may include a crimped portion described above as long as the effect of the present invention is not impaired. Such embodiment may be one in which the flowing of the treatment liquid in the casing is not substantially affected, and for example, an embodiment wherein a portion, for example an end portion, of the non-crimped hollow fiber is crimped, and an embodiment wherein a length of, for example, up to about 20 % of the total length of the non-crimped hollow fiber is crimped, and the like.

In the present specification, the term "aggregate part" formed of at least a portion of the non-crimped hollow fibers means a part in which five or more non-crimped hollow fibers are adjacently present in a cross section substantially perpendicular to the longitudinal direction of the casing such that no crimped hollow fiber is present between any two of the non-crimped hollow fibers (that is, there is no intervention by the crimped hollow fiber between any two of the non-crimped hollow fibers), and other non-crimped hollow fiber may be present between those two. In other words, at least five non-crimped hollow fibers extend along their longitudinal directions without being intervened by a crimped hollow fiber. In a preferred embodiment of the aggregate part, the non-crimped hollow fibers are adjacently present along a length of preferably at least 50 %, more preferably 75 %, even more preferably at least 85 %, particularly preferably at least 95 % of the total length of the non-crimped hollow fibers, and for example, substantially an entire length of the non-crimped hollow fibers. From a viewpoint of more easily obtaining the effect of reducing the pressure loss on the treatment liquid side, the non-crimped hollow fiber aggregate part 33 is preferably formed of 10 or more, more preferably 20 or more non-crimped hollow fibers. The non-crimped hollow fibers 32 forming the hollow fiber aggregate part 33 may have a portion along which they are in contact and a portion along which they are not in contact over an entire longitudinal direction thereof. In other embodiment, non-crimped hollow fibers may be in contact or may be separated over an entire length of the fibers.

It is conceived that in the longitudinal direction of the hollow fiber bundle 30, the non-crimped hollow fiber aggregate part 33 has a region having less undulations as compared with a region formed by the crimped hollow fibers 31, so that the flowing of the treatment liquid becomes smooth and the pressure loss on the treatment liquid side is lowered. It is noted that the above is a conceivable mechanism at present, and the present invention is not limited by such mechanism. By reducing the pressure loss, for example, a load on a pump that supplies the treatment liquid into the hollow fiber membrane module 100 can be reduced.

The ratio of the number of the non-crimped hollow fibers 32 to the total number of the crimped hollow fibers 31 and the non-crimped hollow fibers 32 is preferably 15 % or more, and preferably 35 % or less. Such ratio makes it easier to ensure a practical treatment capacity and reduce the pressure loss on the treatment liquid side. The ratio of the number of the non-crimped hollow fibers 32 to the total number of the crimped hollow fibers 31 and the non-crimped hollow fibers 32 is more preferably 17 % or more, further preferably 19 % or more, and more preferably 33 % or less, and further preferably 31 % or less.

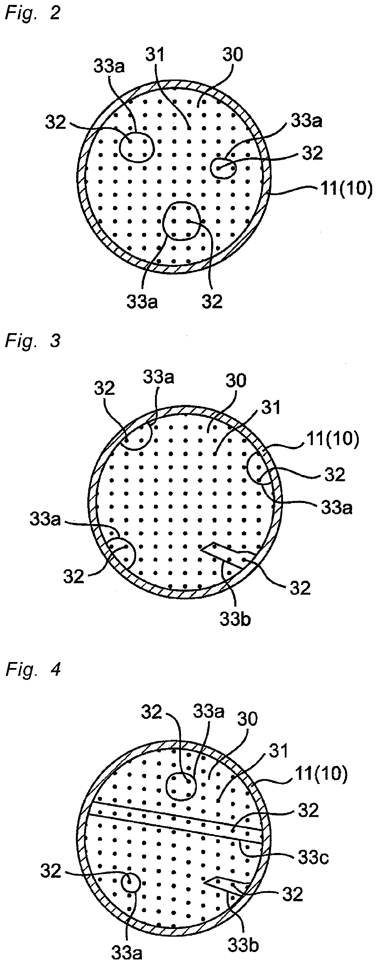

Hereinafter, the non-crimped hollow fiber aggregate part 33 (33a to 33c) will be described with reference to Figs. 2 to 4, but the embodiments of the aggregate part of the non-crimped hollow fibers 32 are not limited thereto. Figs. 2 to 4 show a schematic cross-sectional view of a middle portion, for example a central portion, of the casing 10 of the hollow fiber membrane module 100 of Fig. 1 between one end portion 11 of the casing 10 and the other end portion 11 of the casing 10 which view is perpendicular to the longitudinal direction of the casing 10.

For example, as shown in Fig. 2, the non-crimped hollow fiber aggregate part 33a may be an aggregate of the non-crimped hollow fibers 32 in the form of a cylinder having a circular or elliptical cross-sectional shape. In other embodiment, for example, as shown in Fig. 3, the non-crimped hollow fiber aggregate part 33b may be an aggregate of the non-crimped hollow fibers 32 in the form of a layer which extends from an outer peripheral portion of the hollow fiber bundle 30 toward the inside thereof. In a further embodiment, for example, as shown in Fig. 4, the non-crimped hollow fiber aggregate part 33c may be an aggregate of the non-crimped hollow fibers 32 in the form of a layer which extends from an outer peripheral portion of the hollow fiber bundle 30 through the inside of the bundle 30 to the other outer peripheral portion of the bundle 30.

It is noted that in Figs. 2 to 4, centers of openings which define the cavities of a portion of the many hollow fibers are indicated as dots, and hypothetical shapes of the non-crimped hollow fiber aggregate parts are shown with solid lines for the sake of simplicity. The illustrated dots are exemplary, and the number of illustrated dots shown in the aggregate part 33 does not correspond to the number of the hollow fibers which form the aggregate part.

The above described hypothetical shape means a figure that integrally surrounds, with a minimum peripheral length, the non-crimped hollow fibers of the aggregate part 33 of the non-crimped hollow fibers in a cross section substantially perpendicular to the longitudinal direction of the casing. Since the diameter of the hollow fiber is very small compared to the inner diameter of the casing, it may be considered that the opening of the hollow fiber is substantially a point in the cross section. Therefore, for example, when each of the openings of the five hollow fibers forming the aggregate part is located at a point which corresponds to each vertex of a pentagon, the shape of the aggregate part may be considered to be substantially a pentagon.

The hollow fiber bundle 30 may include a plurality of the non-crimped hollow fiber aggregate parts 33. This means that a plurality of the non-crimped hollow fiber aggregate part s 33 appear in a cross section substantially perpendicular to the longitudinal direction of the casing. The above described shape of the aggregate part may be any appropriate shape.

For example, as shown in Fig. 2, a plurality of cylindrical non-crimped hollow fiber aggregate parts 33a having a circular or elliptic cross-section may be distributed in the hollow fiber bundle 3 in a sea-island structure (that is, a structure in which the non-crimped hollow fiber aggregate parts 33a corresponding to the islands are distributed within the crimped hollow fibers corresponding to the sea).

In other embodiment, for example, a structure as shown in Fig. 3 is possible wherein a number of the layered non-crimped hollow fiber aggregate part(s) 33b extending from the outer peripheral portion of the hollow fiber bundle 30 toward the inside thereof and the non-crimped hollow fiber aggregate part(s) 33a in the cylindrical form having a circular or elliptical cross section are distributed within the hollow fiber bundle 30. Further, for example, as shown in Fig. 3, the cylindrical non-crimped hollow fiber aggregate part(s) 33a having a circular or elliptical cross section may be located in the outer peripheral portion of the hollow fiber bundle 30.

In a further embodiment, for example, a structure as shown in Fig. 4 is possible wherein the layered non-crimped hollow fiber aggregate part(s) 33b extending from the outer peripheral portion of the hollow fiber bundle 30 toward the inside thereof and the layered non-crimped hollow fiber aggregate part(s) 33c extending from the outer peripheral portion of the hollow fiber bundle 30 to the other outer peripheral portion are adjacently located through the crimped hollow fibers 31. Further, for example, a structure as shown in Fig. 4 is possible wherein in addition to the above-described layered non-crimped hollow fiber aggregate parts 33b and 33c, the cylindrical non-crimped hollow fiber aggregate parts 33a having a circular or elliptical cross-sectional shape are distributed.

Further, a plurality of the non-crimped hollow fiber aggregate parts 33 may further be gathered to form an aggregate of the non-crimped hollow fiber aggregate parts 33, of which embodiment thereof is not particularly limited. Such further aggregate may be, for example, of a cylinder having a circular or elliptical cross-sectional shape, a layer extending from the outer peripheral portion of the hollow fiber bundle 30 toward the inside thereof, or a layer extending from one outer peripheral portion to the other peripheral portion of the hollow fiber bundle 30 through the inside thereof. In addition, in the above described further aggregate part, the crimped hollow fiber(s) 31 may be intervened between the non-crimped hollow fiber aggregate parts 33.

The hollow fiber bundle 30 can be prepared, for example, as follows:
For example, the non-crimped hollow fibers 32 are prepared according to the conventional method, and the crimped hollow fibers 31 are prepared according to a method of winding the non-crimped hollow fibers 32 on a bobbin followed by heat-treating them, passing them between gears, or the like.

Next, for example, after winding the crimped hollow fibers 31 and the non-crimped hollow fiber 32 around an octagonal columnar hank, the hollow fibers are cut out at positions each corresponding to the octagonal apex of the hank and thus cut fibers are formed into a cylindrical shape to have a bundle. In this embodiment, the form of the hank is not limited to the octagonal columnar form, and a polygonal or circular columnar hank may be used.

In other embodiment, for example, a hollow fiber bundle 30 may be obtained by laminating a plurality of semi-bundles obtained by laminating a plurality of semi-bundles, which semi-bundles are obtained by stacking the crimped hollow fibers 31 and the non-crimped hollow fibers 32 in a desired ratio thereof, a desired order thereof, and a desired number thereof, and bundling the semi-bundles to have a hollow fiber bundle 30 in the form of a cylinder.

In still other embodiment, for example, a plurality of semi-bundles are prepare by mixing the crimped hollow fibers 31 and the non-crimped hollow fibers 32 at a desired ratio, and bundled into a cylindrical form to obtain a hollow fiber bundle 30.

The above described semi-bundle may be formed of, for example, about 500 to about 2,000 hollow fibers.

In the cross section of the hollow fiber bundle 30 which is substantially perpendicular to the longitudinal direction of the hollow fiber bundle 30, a ratio of a total of areas of figures which are defined by outer peripheries of the hollow fibers which form the hollow fiber bundle 30 to an area of a figure defined by an outer periphery of the hollow fiber bundle 30 (which figure has the same meaning as the figure of the non-crimped hollow fiber aggregate part descried above), that is, a density of the hollow fibers in the hollow fiber bundle 30 (which may hereinafter be referred to as a "hollow fiber density") is preferably larger in portions of the hollow fiber bundle other than in the end portions 34 of the hollow fiber bundle 30. That is, in the hollow fiber bundle 30, it is preferable that the hollow fibers are relatively sparse in the end portion 34 as compared with in the other portions.

In order to increase the treatment capacity of the hollow fiber membrane module by increasing the flowing distance of the treatment liquid, the treatment liquid inlet 12 and the treatment liquid outlet 13 are usually located at or near the end portions 11 of the casing 10, that is, at or near the end portions 34 of the hollow fiber bundle 30. In the hollow fiber bundle 30, by making the hollow fiber density of the end portions 34 smaller than those of the other portions, a space through which the treatment liquid can flow becomes larger in the vicinity of the end portions 34 of the hollow fiber bundle 30, so that it is possible to more easily suppress the pressure decrease of the treatment liquid in the vicinity of the treatment liquid inlet 12 when the treatment liquid is supplied into the hollow fiber membrane module 100 through the treatment liquid inlet 12. As a result, the pressure loss on the treatment liquid side can be reduced more easily. In addition, it becomes easier to collect the liquid in the vicinity of the treatment liquid outlet 13, which can contribute to the suppression of the pressure loss on the treatment liquid side. Further, since the hollow fiber densities of the portions other than the end portions 34 are higher than those of the end portions 34, the treatment capacity of the hollow fiber membrane module can be maintained.

As shown in Fig. 1, in the hollow fiber membrane module 100, the hollow fibers are spread in the vicinity of the end portions 34 of the hollow fiber bundle 30 as compared with the other portions of the bundle, and the hollow fiber densities of the end portions 34 are smaller than the portions other than the end portions 34.

In the cross section of the casing 10, which is perpendicular to the longitudinal direction of the casing 10, a ratio of a total of areas of figures which are defined by outer peripheries of the hollow fibers which form the hollow fiber bundle 30 to an area of a figure defined by an inner periphery of the casing 10, that is, a filling ratio of the hollow fibers in the casing 10 (which may hereinafter be referred to as a "hollow fiber filling ratio") is preferably not less than 30 % and not more than 55 %, and more preferably not less than 40 % and not more than 53 % in the end portions 11 of the casing 10 or the vicinities thereof (as shown in Fig. 1, for example, the vicinity of the treatment liquid inlet 12, the vicinity of the treatment liquid outlet 13, the boundary portions between the hollow fiber bundle 30 and the potting material 50, the vicinities of such boundary portions, the portions filled with the potting material, etc.).

In order to increase the flowing distance of the treatment liquid as described above to increase the treatment capacity, the treatment liquid inlet 12 and the treatment liquid outlet 13 are usually located near the end portions 11 of the casing 10, that is, in the vicinity of the end portions 34 of the hollow fiber bundle 30. By setting the hollow fiber filling ratio of the end portions 11 of the casing 10 to 55% or less, the portions through which the treatment liquid can flow becomes larger in the vicinities of the end portions 34 of the hollow fiber bundle 30, so that it is possible to more easily suppress the pressure decrease of the treatment liquid in the vicinity of the treatment liquid inlet 12 when the treatment liquid is supplied through the treatment liquid inlet 12 into the hollow fiber membrane module 100. As a result, the pressure loss on the treatment liquid side can be reduced more easily. In addition, it becomes easier to collect the liquid in the vicinity of the treatment liquid outlet 13, which can contribute to the suppression of the pressure loss on the treatment liquid side. Further, by setting the hollow fiber filling ratio of the end portions 11 of the casing 10 to 30 % or more, for example, 40 % or more, it becomes easier to maintain the treatment capacity. The hollow fiber filling ratios of the end portions 11 of the casing 10 are preferably 32 % or more, and preferably 53 % or less.

The form of the casing 10 is not particularly limited, but is usually tubular, particularly cylindrical. In order to reduce the hollow fiber filling ratios of the end portions 11 of the casing 10 while increasing the hollow fiber filling ratios to increase the hollow fiber densities of the portions of the other portions, a casing 10 of which end portions have expanded portions relatively to the other portions may be used as shown in Fig. 1, and further a hollow fiber bundle 30 may be used of which end portions have expanded portions relatively to the other portions.

In the hollow fiber membrane module 100 shown in Fig. 1, the casing 10 having the above-mentioned form is used, and the hollow fiber bundle 30 having end portions 34 expanded as compared with the other portions is used. This makes it easier to increase the hollow fibers densities in the portions other than the end portions 11 while reducing the hollow fiber filling ratio at the end portions 11 of the casing 10.

The filling embodiment of the hollow fibers in the end portions 11 of the casing 10 is not particularly limited, and the end portions 11 of the casing 10 may be uniformly filled with the hollow fibers, or may be filled as described in detail below such that a gap is formed in a predetermined portion of the end portion 11 of the casing 10, for example, between the cylindrical casing 10 and the hollow fiber bundle 30.

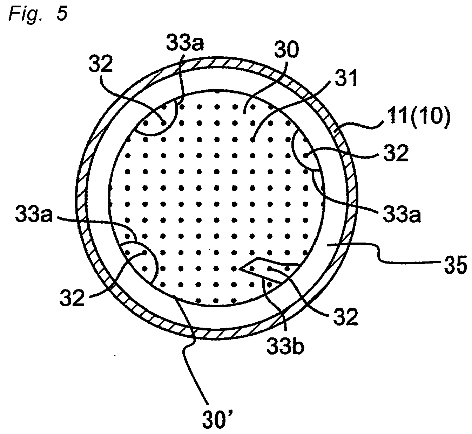

With the hollow fiber membrane module 100 shown in Fig. 1, a portion of the end portion 34 of the hollow fiber bundle 30 is annularly surrounded by a potting material 50. As a result, in the end portion 11 of the casing 10 which is perpendicular to the longitudinal direction of the casing 10 of the hollow fiber membrane module 100 of Fig. 1 (in the embodiment of Fig. 5, the boundary portion between the hollow fiber bundle 30 and the potting material 50), an annular gap 35 is provided between the casing 10 and the hollow fiber bundle 30, and the hollow fibers are filling the inside of the gap 35. The gap 35 provided between the end portion 11 of the casing 10 and the outer periphery 30' of the hollow fiber bundle 30 facilitates the flowing of a dialysate in the vicinity of the end portion 11 of the casing 10 and facilitates pressure loss suppressing. It is noted that the outer periphery of the hollow fiber bundle 30 is shown by a hypothetical line 30' in Fig. 5 for the sake of simplicity.

As shown in Fig. 1, the casing 10 may have baffle plates 14 between the treatment liquid inlet 12 and the hollow fiber bundle, and between the treatment liquid outlet 13 and the hollow fiber bundle 30. As a result, the treatment liquid introduced through the treatment liquid inlet 12 can be more uniformly distributed in the casing 10.

The material constituting the hollow fibers is not particularly limited, and it may be, for example, a cellulose acetate, a cellulose triacetate, a polyacrylonitrile, a polysulfone, a polyvinyl alcohol, a polyacrylate, a polymethacrylate, a polymethylmethacrylate, a polyethersulfone, a polysulfone, a polyamide, a polyester, a polyethylene, a polypropylene, or the like. Particularly, a polyether sulfone and a cellulose triacetate are preferable.

The form of the header 70 is not particularly limited, and may be appropriately selected corresponding to the structure of the end portions 11 of the casing 10.

The materials constituting the casing 10 and the headers 70 are not particularly limited, and they may be made of, for example a resin. When the casing 10 and/or the headers 70 is made of the resin, the resin is not particularly limited, and it may be, for example, a polypropylene, a polycarbonate, a polystyrene, a polyethylene, a polytetrafluoroethylene, a polyester, a polyvinyl chloride, or an ABS (acrylonitrile-butadiene-styrene) or the like.

The material constituting the potting material 50 is not particularly limited, and it may be, for example, a polyurethane resin, an epoxy resin, a silicone resin, or the like.

The method for manufacturing the hollow fiber membrane module 100 according to the embodiment of the present invention is not particularly limited, and a generally known method may be used except for the step of preparing the hollow fiber bundle 30.

The hollow fiber membrane module 100 according to the embodiments of the present invention can be preferably used, for example, as a dialyzer for treating blood (liquid to be treated) with a dialysate (treatment liquid) in the medical field, and has a practical clearance (treatment capacity) can be maintained while the pressure loss on the dialysate side can be reduced.

For example, when a patient requiring hemodialysis is brought to a hospital in a serious condition, it is necessary to immediately prepare for priming and the like in order to use a dialyzer. However, if the pressure loss on the dialysate side is large, a pump is required which is capable of sending a liquid at a discharge pressure larger than usual. It takes time to prepare such a pump, so that there is a possibility that the hemodialysis cannot be performed promptly. By using the hollow fiber membrane module 100 according to the embodiments of the present invention as a dialyzer, the pressure loss on the dialysate side can be reduced. As a result, a pump generally used in the dialysate process can be used for priming and the like, so that the hemodialysis can be started promptly without taking a relatively long time for its preparation.

### Examples

Hereinafter, the present invention will be described in more detail with reference to Example and Comparative Example, but the present invention is not limited by the following Example.

### (Example)

The non-crimped hollow fibers 32 were prepared according to the conventional method, and the crimped hollow fibers 31 were prepared by passing the non-crimped hollow fibers 32 between gears.

A plurality of small bundles 1 were prepared in which a plurality of the crimped hollow fibers 31 (outer diameter: 280 µm) were bundled, and a plurality of small bundles 2 were prepared in which a plurality of the non-crimped hollow fibers 32 (outer diameter: 280 µm) were bundled. A plurality of semi-bundles were prepared each of which was obtained by bundling a plurality of the small bundles 1 and a plurality of the small bundles 2, and those semi-bundles were bundled into a cylindrical form to obtain a hollow fiber bundle 30. The total number of the crimped hollow fibers 31 and the non-crimped hollow fibers 32 constituting the hollow fiber bundle 30 was 11520, of which 20 % (about 2300 fibers) were the non-crimped hollow fibers.

The hollow fiber bundle 30 made of a polyether sulfone was inserted into a cylindrical casing 10 made of a polypropylene, and a portion of each end portion 34 of the hollow fiber bundle 30 was bonded to each end portion 11 of the casing 10 with a potting material 50 made of a urethane resin. Thereafter, attaching the header 50 to each end portion of the casing, the hollow fiber membrane module 100 (dialyzer) was prepared as the Example as shown in Fig. 1. When a cross section of a middle portion of the hollow fiber membrane module 100 which was perpendicular to the longitudinal direction of the hollow fiber membrane module 100 of the embodiment was observed, a plurality of the non-crimped fiber aggregate parts 33a in cylindrical forms having circular or elliptical outer figures were found to be distributed in the inside and around the outer peripheral portion of the hollow fiber bundle 30 in manners as shown in Figs. 2 and 3.

Further, in the cross section of the end portion 11 of the casing 10 (here, in the boundary portion between the hollow fiber bundle 30 and the potting material 50) which was perpendicular to the longitudinal direction of the casing 10, the area of the figure defined by the inner periphery of the casing (inner diameter: 4.92 cm) was 19.01 cm², and the hollow fiber filling ratio in the end portion 11 was 37.3 %.

Further, in the hollow fiber membrane module 100 of the Example, the hollow fiber density was larger in the portion other than the end portions 34 than in the end portions 34 of the hollow fiber bundle 30, and the end portions 34 of the hollow fiber bundle 30 were expanded compared with the other portions.

### (Comparative example)

A conventional hollow fiber membrane module 100 (dialyzer) as Comparative Example was manufactured in the same manner as in the Example except that the crimped hollow fibers 31 were used without using a non-crimped hollow fiber 32.

Using the hollow fiber membrane modules 100 of the Example and the Comparative Example obtained as described above, pressure losses and clearances on the dialysate side were measured using a test circuit of Fig. 4 of JIS T3250:2013. The blood flow rate was 200 mL/min and the dialysate flow rate was 500 mL/min.

With the hollow fiber membrane module 100 of the Comparative Example, the pressure loss on the dialysate side was 3.8 kPa. On the other hand, with the hollow fiber membrane module 100 of the Example, the pressure loss on the dialysate side was 3.0 kPa which was smaller, so that the pressure loss on the dialysate side was reduced by more than 20% as compared with the conventional hollow fiber membrane module 100 of the Comparative Example. Further, the hollow fiber membrane module 100 of the Example had a practical clearance equivalent to that of the conventional hollow fiber membrane module 100 of the Comparative Example. That is, the hollow fiber membrane module 100 of the Example was able to further reduce the pressure loss on the dialysate side while having a practical clearance.

### [Explanation of References]

- 10: casing
- 11: end portion of casing
- 12: treatment liquid inlet
- 13: treatment liquid outlet
- 30: hollow fiber bundle
- 30': hypothetical periphery of hollow fiber bundle
- 31: crimped hollow fiber
- 32: non-crimped hollow fiber
- 33, 33a, 33b, 33c: non-crimped hollow fiber aggregate part
- 34: end portion of hollow fiber bundle
- 35: annular gap
- 50: potting material
- 70: header
- 71: inlet of liquid to be treated
- 72: outlet of liquid to be treated
- 100: hollow fiber membrane module

## Claims

1. A hollow fiber membrane module comprising a casing and a hollow fiber bundle disposed in the casing, wherein
the hollow fiber bundle comprises crimped hollow fibers and non-crimped hollow fibers, and
at least a portion of the non-crimped hollow fibers forms an aggregate part.

2. The hollow fiber membrane module according to claim 1, wherein the hollow fiber bundle includes a plurality of the aggregate parts.

3. The hollow fiber membrane module according to claim 1 or 2, wherein a ratio of the number of the non-crimped hollow fibers to a total of the number of the crimped hollow fibers and the number of the non-crimped hollow fibers is 15 % or more and 35 % or less.

4. The hollow fiber membrane module according to any one of claims 1 to 3, wherein in a cross section of the hollow fiber bundle which is substantially perpendicular to a longitudinal direction of the hollow fiber bundle, a ratio of a total of areas of figures which are defined by outer peripheries of the hollow fibers which form the hollow fiber bundle to an area of a figure defined by an outer periphery of the hollow fiber bundle is larger in portions of the hollow fiber bundle other than the end portions of the hollow fiber bundle.

5. The hollow fiber membrane module according to any one of claims 1 to 4, wherein in a cross section of the casing, which is perpendicular to a longitudinal direction of the casing, a ratio of a total of areas of figures which are defined by outer peripheries of the hollow fibers which form the hollow fiber bundle to an area of a figure defined by an inner periphery of the casing is not less than 40 % and not more than 55 %.
